# EUROPEAN PATENT APPLICATION

(11) **EP 4 814 444 A1**
(43) Date of publication of application: **30.09.2026**
(21) Application number: 25167142.6
(22) Date of filing: 28.03.2025
(51) Int. Cl.: G01C 21/34

(54) **METHOD AND SYSTEM FOR OPTIMIZING ROUTE PLANNING FOR AT LEAST TWO VEHICLES**

(71) Applicant: Bayerische Motoren Werke Aktiengesellschaft, 80809 München (DE)
(72) Inventor: Bohn, Niels, Fort Lee, NJ 07024 (US); Langton, Adam, San Francisco, CA 94129 (US)

(57) **Abstract**

The invention relates to a method for optimizing route planning for at least two vehicles (A, B, C, D), comprising the steps of: receiving, by each of the at least two vehicles (A, B, C, D), respective tasks and/or destinations from an external entity (428); connecting, by a server computer (404), with each of the at least two vehicles (A, B, C, D); receiving, by the server computer (404) from each of the at least two vehicles (A, B, C, D), data comprising at least one of a starting point, a current location (W, Y), at least one destination (X, Z), an order of destinations for a required task, a desired schedule for reaching each destination (X, Z), and/or an ending destination for a period of time; evaluating, by the server computer (404), a respective optimized route (204, 206, 208, 210) for each of the at least two vehicles (A, B, C, D) based on an optimization parameter; and communicating (S5), by the server computer (404), the respective optimized route (204, 206, 208, 210) to the respective one of the at least two vehicles (A, B, C, D).

## Description

The present invention relates to the field of charging solutions and delivery solutions for electric vehicles. The disclosure specifically relates to a method and system for optimizing route planning for at least two vehicles.

As the adoption of electric vehicles continues to grow, efficient and flexible delivery and charging systems are becoming increasingly important. In the context of delivery services, traditional methods often rely on a "fixed location/variable time" system, where goods or services are delivered to a predetermined location within a variable time range.

For example, in the case of food delivery, a customer places an order to be delivered to a specific address, and the delivery service provides an estimated time window for arrival. This approach requires the receiving party to remain at the fixed location during the delivery window, introducing inefficiencies and limitations. The receiving party is unable to be mobile while waiting for the delivery, leading to potential inconvenience and time loss.

Additionally, the uncertainty regarding the exact delivery time may result in extended waiting periods. From the perspective of the delivering party, this system may not optimize efficiency, as traffic conditions or route flexibility are not fully considered. The ability to determine a more convenient meeting time or location for both parties is limited, which can lead to increased costs and delays. Moreover, perishable items may not arrive at the ideal time for consumption, potentially reducing their quality or usability.

These challenges highlight the need for an improved method and/or system that enhances the coordination between the delivering and receiving parties while addressing issues related to timing, mobility, and efficiency.

The object of the present invention is to provide such an improved method and/or system for presenting charging solutions and delivery solutions for mobile vehicles.

This object is solved by the objects of the independent claims. Advantageous embodiments of the invention are given in the dependent claims.

The invention relates to a method for optimizing route planning for at least two vehicles, comprising the steps of: receiving, by each of the at least two vehicles, respective tasks and/or destinations from an external entity; connecting, by a server computer, with each of the at least two vehicles; receiving, by the server computer from each of the at least two vehicles, data comprising at least one of a starting point, a current location, at least one destination, an order of destinations for a required task, a desired schedule for reaching each destination, and/or an ending destination for a period of time; evaluating, by the server computer, a respective optimized route for each of the at least two vehicles based on an optimization parameter; communicating, by the server computer, the respective optimized route to the respective one of the at least two vehicles.

The invention also includes a system for optimizing route planning for at least two vehicles, comprising: at least two vehicles configured for receiving, by each of the at least two vehicles, respective tasks and/or destinations from an external entity; a server computer, preferably including a route manager, configured for connecting with each of the at least two vehicles, receiving from each of the at least two vehicles, data comprising at least one of a starting point, a current location, at least one destination, an order of destinations for a required task, a desired schedule for reaching each destination, and/or an ending destination for a period of time; evaluating a respective optimized route for each of the at least two vehicles based on an optimization parameter; and communicating, by the server computer, the respective optimized route to the respective one of the at least two vehicles. The system may also comprise the external entity and maybe further components.

It is to be understood that the feature of "evaluating a respective optimized route for each of the at least two vehicles based on an optimization parameter" is to be understood in that a first optimized route is evaluated for a first one of the at least two vehicles and that a second optimized route is evaluated for a second one of the at least two vehicles. Also, it is to be understood that the feature of "communicating, by the server computer, the respective optimized route to the respective one of the at least two vehicles" is to be understood that the first optimized route is communicated to the first one of the at least two vehicles and that the second optimized route is communicated to the second one of the at least two vehicles. If more than two vehicles are present, this applies, mutatis mutandis. It is to be understood that the optimized route for the respective vehicle can be jointly developed and that the respective optimized route for the at least two vehicles may be dependent upon one another. Therefore, it is to be noted that the first optimized route may be evaluated jointly with the second optimized route, and vice versa.

The features and advantages named for the method apply, mutatis mutandis, to the system, and vice versa.

The method preferably involves at least two vehicles receiving respective tasks and/or destinations from external entities, which preferably allows for dynamic assignment of transportation tasks based on real-time demand.

A server computer preferably connects with each of the vehicles, enabling centralized coordination and monitoring of their operations. Each vehicle preferably sends the server computer data including its starting point, current location, at least one destination, the order of destinations for the required task, a desired schedule for reaching each destination, and an ending destination for a period of time, which preferably ensures that the server has sufficient information to determine optimal routing decisions.

The server computer preferably evaluates an optimized route for each of the vehicles based on an optimization parameter, which preferably allows for efficient navigation and resource management. It shall be emphasized once again that the optimized routes that are evaluated for each vehicle can be mutually dependent on one another. The optimization parameter preferably includes factors such as traffic information, weather conditions, road closures, availability of chargers, and payload quality requirements, which preferably enhance route planning by considering real-world constraints.

The server computer preferably determines optimized route conditions, including departure time, meeting locations, and meeting times, which preferably improve coordination between vehicles and ensure timely task completion. The server computer preferably communicates the respective optimized route and the respective optimized route conditions to the respective one of the at least two vehicles, which preferably enables seamless implementation of optimized travel plans.

Each of the at least two vehicles preferably confirms receipt of the optimized routes and optimized route conditions, and starts driving according to the optimized route and optimized route conditions, which preferably increases the reliability of the system by ensuring that vehicles follow the computed plan.

The process is preferably re-initiated regularly over time, with routes recalculated based on changes to the number of vehicles, changes in traffic or weather conditions, and other factors impacting travel time, which preferably ensures continuous adaptation to dynamic conditions and enhances the efficiency of transportation operations.

The term "mobile vehicle" or "mobile object" includes any system for the transportation of people and goods on roads, e.g. cars, trucks, buses, motorhomes, motorcycles, on rails, on water or in the air. The vehicle can be powered by a combustion engine, a hybrid drive or a purely electric drive. Public or private charging stations can use the procedure. Any battery that can be used for an electric or hybrid application, e.g. a lithium-ion battery, also known as a lithium-ion accumulator or lithium accumulator, can be used. The terms "battery" and "accumulator" are equivalent.

The present invention may provide a method and system that sequences the movement of multiple vehicles (moving objects) whose respective route is dependent on each other. The method determines collaboration of the vehicles (meeting locations, meeting times, payload/task exchanges, sequencing of meetings) to minimize overall system costs, for example cost for CO₂, time, energy, distance, etc., in determining the route of each moving objects.

For the present invention, it may not be necessary that the at least two vehicles start at the same location, though this may be a possible scenario. Also, it may not be necessary that the at least two vehicles depart at the same time, though this may be a possible scenario. Furthermore, it may not be necessary that the at least two vehicles comprise the same charging fueling technology. Either one of the at least two vehicles may have multiple modes of transportation, for example, an air traveling mode and/or a land-traveling mode and/or a water traveling mode.

As an exemplified use case of the presented method, food delivery may be presented, where hot food is delivered by a drone to a driver of a mobile vehicle that is traveling on a remote highway, using determined routes. The food arrives fresh and hot from a restaurant that is located off the route that the driver is traveling. The food arrives at a fixed time and is delivered to the driver without the driver having to leave its optimal route.

A further example for optimizing charging solutions by the presented method may be that two electric vehicles are traveling to separate destinations. Vehicle C may be less efficient and may have a smaller battery capacity, whereas vehicle D is more efficient and has a larger battery capacity. Vehicle C may meet vehicle D so that vehicle D may refuel vehicle C on the common predetermined route. The predetermined routes for both vehicles are therefore optimized to minimize fuel costs and travel time, using the presented method. Both vehicles C, D keep on traveling to their respective destinations after the refueling event.

For the presented method and system, an electric vehicle may serve as a mobile charging device for parked electric vehicles that are part of a fleet. The optimization based on this invention preferably determines the best time, charge amount, and/or sequence to charge each vehicle. The optimization may also determine the best parking location for each participating vehicle.

Presently, there is provided a route optimization strategy for at least two mobile vehicles. Said strategy identifies the optimal location for the mobile vehicles to meet for a predetermined period of time at any potential geographic location that is preferably optimal for the at least two mobile vehicles. The optimal route may be planned for the at least two vehicles such that different parameters are optimized, for example, parameters like fuel cost, route time to destination, etc.

The presented approach shows different benefits. Preferably, the mobile vehicle that may receive / that is delivered an item or object from another mobile vehicle can continue on its route and still receive a delivery without having to alter the route. This avoids time waste and prevents inefficiency. Additionally, the delivering mobile vehicle may be able to meet the receiving mobile vehicle at an optimized time and/or an optimized location at which, for example, fuel costs and/or time and recipient dwell time are minimized. Furthermore, the receiving vehicle may not need to predict where it will be in the future, as the delivery mobile vehicle can meet the receiving vehicle wherever it is on an agreed route, even if its travel is faster or slower than originally projected. Still further, the receiving mobile vehicle can expect that the delivery may arrive at the time that is desired, meaning that the user of the receiving mobile vehicle can plan activities so that she/he can take advantage of the arrival of an optimal quality perishable item and use said item while the perishable item is fresh.

In a further aspect, it is proposed that the optimization parameter comprises at least one of traffic information, weather conditions, road closures, availability of chargers, and payload quality requirements, including temperature control and payload priorities.

The optimization parameter preferably includes traffic information, which preferably provides real-time and/or historical data on congestion levels, road conditions, and expected delays, thereby enabling more accurate route planning and reducing travel time. Weather conditions preferably encompass information about environmental factors such as rain, snow, fog, or tides, which preferably allow for adaptive route adjustments to avoid hazardous conditions and improve safety. Road closures preferably refer to temporary or permanent blockages due to construction, accidents, or administrative restrictions, which preferably ensure that alternative paths can be chosen proactively, minimizing disruptions. The availability of chargers preferably includes real-time data on the location, status, and capacity of electric vehicle charging stations, which preferably support efficient energy planning and reduce downtime for electric vehicles. Payload quality requirements preferably define conditions necessary for transporting sensitive or perishable goods, such as maintaining controlled temperature environments or prioritizing urgent deliveries, which preferably enhance compliance with transport regulations and ensure cargo integrity. Temperature control preferably refers to the ability to regulate and monitor the thermal conditions inside the vehicle's storage compartment, which preferably prevents spoilage of goods such as pharmaceuticals or food items. Payload priorities preferably involve a hierarchical system for categorizing deliveries based on urgency, customer status, or contractual obligations, which preferably improve service efficiency by ensuring that high-priority shipments reach their destinations first.

In a further aspect, it is proposed that the method comprises determining, by the server computer, optimized route conditions comprising at least one of departure time, meeting locations, and meeting times.

The determination of optimized route conditions preferably involves analyzing various factors to establish departure time, which preferably ensures that vehicles leave their initial location at the most advantageous moment to reduce delays and improve coordination. Meeting locations preferably refer to designated points where multiple vehicles or entities intersect for logistical or operational purposes, which preferably facilitate synchronized handovers, cargo transfers, or driver changes. Meeting times preferably define the scheduled timing for such coordinated events, which preferably improve reliability and efficiency in multi-vehicle operations. The optimization process preferably accounts for variables such as current traffic flow, predicted delays, and service level agreements, which preferably lead to improved adherence to operational schedules. By dynamically adjusting these conditions, the method preferably increases overall system efficiency and minimizes resource wastage.

In a further aspect, it is proposed that the server computer communicates the respective optimized route conditions to the respective one of the at least two vehicles.

The server computer preferably communicates the respective optimized route conditions to the respective one of the at least two vehicles, which preferably ensures that respective vehicle receives up-to-date routing and scheduling instructions in real time. Communication preferably occurs through wireless networks such as cellular data, dedicated short-range communication (DSRC), or satellite-based systems, which preferably provide a stable and reliable data exchange platform. The transmission of optimized route conditions preferably allows vehicles to adjust their paths dynamically based on newly available data, which preferably improves adaptability in response to sudden changes such as roadblocks, weather events, or congestion. The communication process preferably enhances coordination between multiple vehicles by synchronizing their travel routes and schedules, which preferably improves fleet management and operational efficiency. Furthermore, the communication of route conditions preferably enables automated decision-making, allowing vehicles to respond to changing circumstances without human intervention, which preferably enhances autonomy and reduces the need for manual oversight.

In a further aspect, it is proposed that each of the at least two vehicles confirms receipt of the optimized route.

Each of the at least two vehicles preferably confirms receipt of the optimized route, ensuring that the server computer or control system receives an acknowledgment before execution. This confirmation preferably takes place through a wireless communication channel such as cellular networks, Wi-Fi, or dedicated vehicle-to-infrastructure communication, which preferably enhances reliability and ensures that the vehicles operate based on the most up-to-date routing information. The confirmation process preferably includes a verification mechanism that checks the integrity and completeness of the received route data, which preferably prevents errors or inconsistencies in navigation. The acknowledgment is preferably logged by the system for monitoring and troubleshooting purposes, which preferably improves fleet management by providing traceability and operational transparency. If a vehicle fails to confirm receipt, a fallback mechanism is preferably triggered, such as resending the route or alerting an operator, which preferably enhances system robustness and reduces the risk of miscommunication.

In a further aspect, it is proposed that each of the at least two vehicles starts driving according to the optimized route.

Each of the at least two vehicles preferably starts driving according to the optimized route, which preferably ensures that the computed navigation path is executed in real-world conditions. The vehicle's control system preferably processes the route data and integrates it into an onboard navigation system, which preferably enables automated or semi-automated driving decisions. The execution of the optimized route preferably allows for dynamic adjustments based on traffic flow, road conditions, and other real-time parameters, which preferably increase efficiency and reduce travel time. The optimized route is preferably structured to minimize unnecessary detours and energy consumption, which preferably contributes to cost savings and environmental benefits. If external factors necessitate deviation from the planned route, the vehicle preferably reports such deviations back to the server computer, which preferably allows for rapid re-optimization and improved coordination between multiple vehicles.

In a further aspect, it is proposed that the process is re-initiated regularly over time, wherein routes are recalculated based on changes to the number of vehicles and changes in traffic or weather conditions that impact travel time.

The process is preferably re-initiated regularly over time, allowing for continuous adaptation to dynamic conditions. Route recalculations are preferably triggered based on updated data regarding traffic congestion, accidents, road closures, and other relevant factors, which preferably enhance real-time responsiveness. The system preferably monitors changes in the number of active vehicles, adjusting routes to accommodate new entries or withdrawals from the fleet, which preferably optimizes resource utilization and prevents bottlenecks. The recalculation process preferably integrates weather updates, such as fog, heavy rain, or temperature fluctuations, ensuring that vehicles operate safely and efficiently under changing environmental conditions. Travel time is preferably reassessed in light of updated parameters, ensuring that estimated arrival times remain accurate and reliable, which preferably improves service predictability and customer satisfaction. The automated nature of the re-initiation process preferably reduces the need for manual intervention, allowing for a more autonomous and efficient fleet management system.

In a further aspect, it is proposed that the external entity providing tasks and/or destinations to the at least two vehicles comprises at least one of logistics service providers, ride-sharing platforms, delivery service operators, fleet management systems, governmental transportation authorities, and/or private customers.

The external entity preferably provides tasks and/or destinations to the at least two vehicles, ensuring that assignments are dynamically allocated based on operational needs. Logistics service providers preferably coordinate freight and cargo transport, optimizing supply chain efficiency and reducing delays in goods movement. Ride-sharing platforms preferably manage passenger transportation, facilitating efficient vehicle utilization and reducing congestion through shared mobility. Delivery service operators preferably oversee the distribution of parcels, food, and essential goods, ensuring timely and organized deliveries. Fleet management systems preferably monitor and control vehicle operations, enabling real-time adjustments and optimal resource allocation. Governmental transportation authorities preferably regulate and oversee public and private transportation networks, ensuring compliance with safety standards and traffic laws. Private customers preferably initiate individual transport requests, enabling personalized and flexible mobility solutions. The integration of multiple external entities preferably enhances adaptability and ensures that vehicles operate in diverse scenarios, improving overall transportation efficiency.

In a further aspect, it is proposed that the optimization parameter is configured to minimize and/or maximize at least one of total travel distance, total travel time, energy consumption, operational costs, carbon emissions, vehicle utilization efficiency, service reliability, or delivery time accuracy.

The optimization parameter is preferably configured to minimize and/or maximize key operational metrics, ensuring efficiency in fleet management. The total travel distance is preferably minimized to reduce fuel consumption, lower costs, and extend vehicle lifespan. The total travel time is preferably minimized to improve delivery speed, reduce delays, and enhance customer satisfaction. Energy consumption is preferably optimized, particularly for electric vehicles, ensuring efficient battery usage and reducing the need for frequent recharging. Operational costs are preferably minimized by optimizing routes, reducing idle time, and preventing unnecessary detours. Carbon emissions are preferably reduced by selecting eco-friendly routes, promoting efficient fuel usage, and integrating low-emission transport options. Vehicle utilization efficiency is preferably maximized by ensuring optimal assignment of tasks to vehicles, reducing downtime, and increasing the number of completed trips per vehicle. Service reliability is preferably enhanced by considering real-time traffic, weather, and road conditions, reducing uncertainties in transport operations. Delivery time accuracy is preferably improved by dynamically adjusting schedules, ensuring that goods and passengers reach their destinations as planned. The ability to balance these parameters preferably enables transportation networks to operate more sustainably and cost-effectively.

In a further aspect, it is proposed that the tasks and/or destinations comprise at least one of delivering goods and/or food and/or packages, transporting passengers and/or ride-sharing, performing maintenance and/or repair services, providing emergency response and/or medical transportation, collecting and/or distributing rental vehicles, or conducting autonomous vehicle fleet operations.

Tasks and/or destinations preferably encompass various transportation functions, ensuring a broad application of the system. Delivering goods, food, and packages preferably allows logistics providers and couriers to optimize delivery routes and ensure timely distribution. Transporting passengers and/or ride-sharing preferably enhances urban mobility by maximizing the occupancy of vehicles and reducing congestion. Performing maintenance and/or repair services preferably ensures that service vehicles are optimally dispatched to address technical failures or scheduled servicing needs. Providing emergency response and/or medical transportation preferably enables rapid deployment of vehicles for urgent healthcare needs, ensuring timely intervention in critical situations. Collecting and/or distributing rental vehicles preferably supports car-sharing and rental services, ensuring efficient fleet rebalancing across different locations. Conducting autonomous vehicle fleet operations preferably enables self-driving vehicles to perform transportation tasks with minimal human intervention, increasing automation and efficiency in mobility services. By integrating these diverse tasks and destinations, the system preferably ensures adaptability and operational efficiency across multiple transport sectors.

In a further aspect, it is proposed that the system comprises a server computer having at least one of a processor, a communication interface, a memory input, an energy storage, a navigation and/or mapping functionality unit, and a memory output.

The system preferably comprises a server computer equipped with key components for processing and managing vehicle operations. The processor preferably handles data computation, executing complex algorithms for route optimization, task allocation, and real-time adjustments. A communication interface is preferably included to facilitate data exchange between the server and vehicles, ensuring seamless connectivity and real-time updates. A memory input preferably enables the storage and retrieval of operational data, including historical routes, vehicle assignments, and optimization parameters. Energy storage is preferably integrated to ensure uninterrupted system operation, particularly in the event of power fluctuations or outages. A navigation and/or mapping functionality unit preferably provides geospatial data, enabling accurate route planning and real-time navigation adjustments. A memory output preferably supports the retrieval and transmission of stored data to relevant system components, ensuring efficient data processing. These components preferably work together to enable efficient, scalable, and reliable transportation management.

In a further aspect, it is proposed that the at least two vehicles each comprise at least one of a communication interface, an energy storage, a memory, a control unit, and a navigation and/or mapping functionality unit.

Each of the at least two vehicles preferably comprises critical hardware components that enable communication, navigation, and control functionalities. A communication interface is preferably included to allow vehicles to exchange data with the server computer and other vehicles, ensuring real-time coordination. Energy storage is preferably provided to power vehicle operations, particularly for electric vehicles, ensuring continuous functionality. A memory unit is preferably used to store operational data, including route history, task allocations, and vehicle performance metrics, facilitating onboard decision-making. A control unit is preferably responsible for processing received instructions, managing vehicle behavior, and integrating sensor data for autonomous or assisted driving. A navigation and/or mapping functionality unit is preferably included to provide real-time positioning, route guidance, and map-based decision-making, enabling precise and efficient travel. These components preferably enhance the vehicle's ability to operate independently and in coordination with the overall fleet management system, improving transportation efficiency and service reliability.

The invention also includes a computer program product comprising instructions which, when the method is executed by a computer, cause the computer to execute the method.

The invention also comprises a computer-readable medium on which the computer program product is stored.

Examples of embodiments of the invention are shown in the figures and are described in more detail below. In the following, unless otherwise specified, the same reference signs are used for identical and similarly acting elements.

It shows:
- Figure 1: a schematic flow chart of an example of the claimed method,
- Figure 2: a schematic view of delivery routes of two vehicles over the period of a working day,
- Figure 3A: a schematic view of independent individual routes of two vehicles;
- Figure 3B: a schematic view of mutually dependent route optimization for the two vehicles of Figure 3A,
- Figure 3C: a table comparison between the routes of Figure 3A and Figure 3B,
- Figure 4: a schematic overview of an example of the claimed system,
- Figure 5: a schematic flow chart of an example of the claimed method,
- Figure 6A: a schematic view of independent routes vs route manager dependent route optimization of three vehicles, and
- Figure 6B: a table comparison of independent routes vs route manager dependent route optimization of three vehicles.

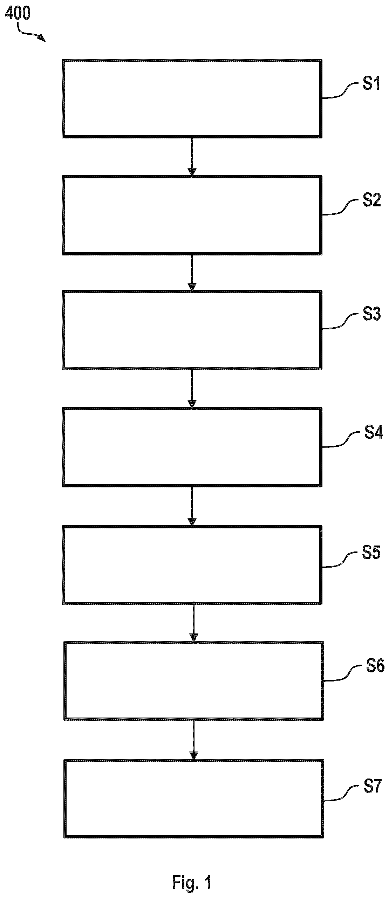

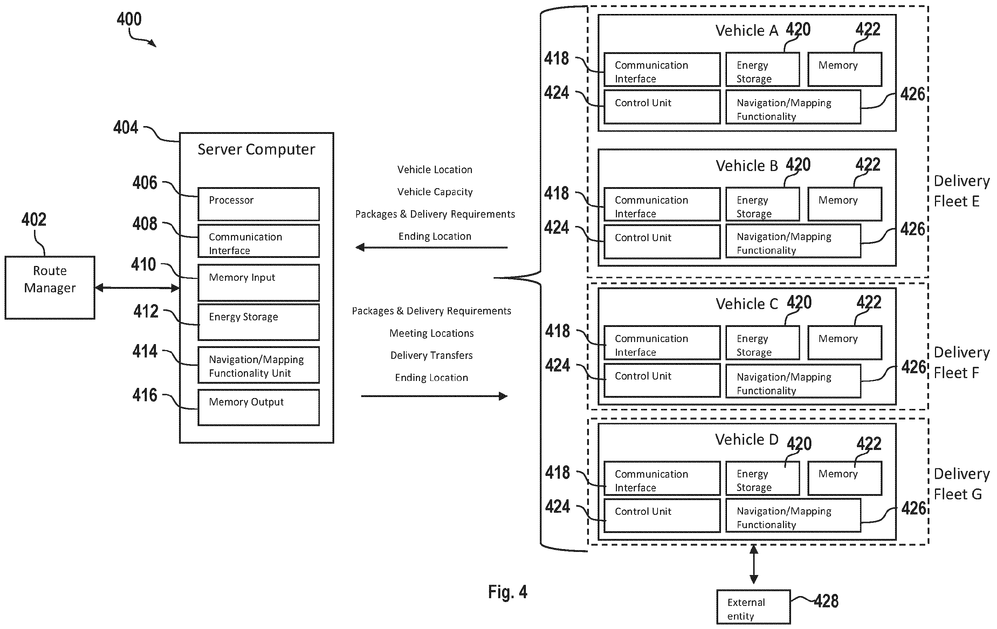

In Figure 1, the method according to the invention is illustrated in a first embodiment using a system 400 (see Figure 4). The method for optimizing route planning for at least two vehicles A, B, comprising the steps of: receiving S1, by each of the at least two vehicles, respective tasks and/or destinations from an external entity; connecting S2, by a server computer, with each of the at least two vehicles; receiving S3, by the server computer from each of the at least two vehicles, data comprising at least one of a starting point, a current location, at least one destination, an order of destinations for a required task, a desired schedule for reaching each destination, and/or an ending destination for a period of time; evaluating S4, by the server computer, a respective optimized route for each of the at least two vehicles based on an optimization parameter; communicating S5, by the server computer, the respective optimized route to the respective one of the at least two vehicles. The method may further comprise the step of determining S6, by the server computer, optimized route conditions comprising at least one of departure time, meeting locations, and meeting times and/or the step S7 of confirming, by each of the at least two vehicles, receipt of the optimized route.

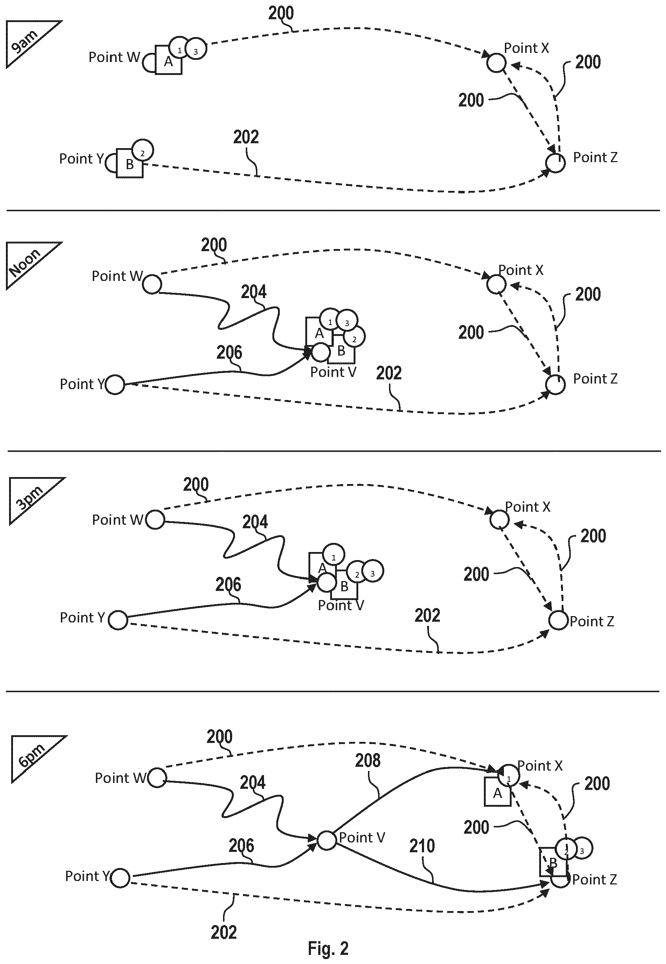

Figure 2 shows a schematic view of delivery routes 200, 202 of two vehicles A, B over the period of a working day, namely at 9am, Noon, 3pm and 6pm. Both vehicles A, B are configured to deliver packages including items, food or the like to different points. The vehicles A and B are independent vehicles / mobile objects with deliveries, i.e., packages, (1), (2), (3) and end point destinations X, Z preferably determined by separate fleet managers. Each vehicle A, B has deliveries with specific delivery points.

An objective/requirement of the vehicle A is to deliver package (1) to Point X and to deliver package (3) to Point Z. Also, the vehicle A has the requirement to end the working day, i.e., at 6pm, at the Point X.

An objective/requirement of the vehicle B is to deliver package (2) to Point Z and to end the day, i.e. at 6pm, at the Point Z. In Figure 2, the dotted lines 200, 202 represent the preferably individually optimized routes 200, 202.

According to the claimed method, the vehicles A, B may be configured to report their respective locations W, Y, their respective routes 200, 202 and objectives, i.e., the deliveries, i.e., packages, (1), (2), (3), the to a route manager 402 of the system 400 (see Figure 4). The route manager 402 evaluates, based on the respective locations W, Y, different routes 204, 206, at least one meeting point V and/or delivery transfers based on an optimization parameter.

For example, the route manager 402 may determine the routes 204, 206, the meeting point V, a meeting time (here: noon), and delivery transfer that maximizes the predefined optimization parameter, i.e. that minimizes cost and/or distance to travel, in the system 400. Thereby, the route manager 402 can determine an individual route 204, 206 that optimizes both the vehicles A, B for cost and/or energy and/or fuel and/or travel time and that meets the predetermined delivery requirements and the respective end point X, Z for each of the vehicles A, B. Therefore, the route manager 402 may communicate the respective calculated routes 204, 206 to the vehicle A and the vehicle B, preferably, individually, to direct each of the vehicles A, B to meet at the meeting point V, where the vehicle A preferably transfers at least one of the packages, here the package (3) to the vehicle B. Thereby, the optimized route 204 is communicated to vehicle A, whereas the optimized route 206 is communicated to vehicle B. Also, the route manager 402 directs the vehicles A, B to complete their deliveries to the end points X and to the end point Z via routes 208, 210, respectively, and end their respective delivery route at their predetermined end locations X, Z. Thereby, the optimized route 208 is communicated to vehicle A, whereas the optimized route 210 is communicated to vehicle B. Also, the vehicles A, B each follow their specified routes 208, 210 to the end points X, Z. Thereby, the vehicles A, B may, preferably constantly or in predefined time intervals, communicate along their delivery route to give actual information to the route manager 402 regarding time to destination, traffic, etc. The route manager 402 may update the calculated routes based on this information, if necessary.

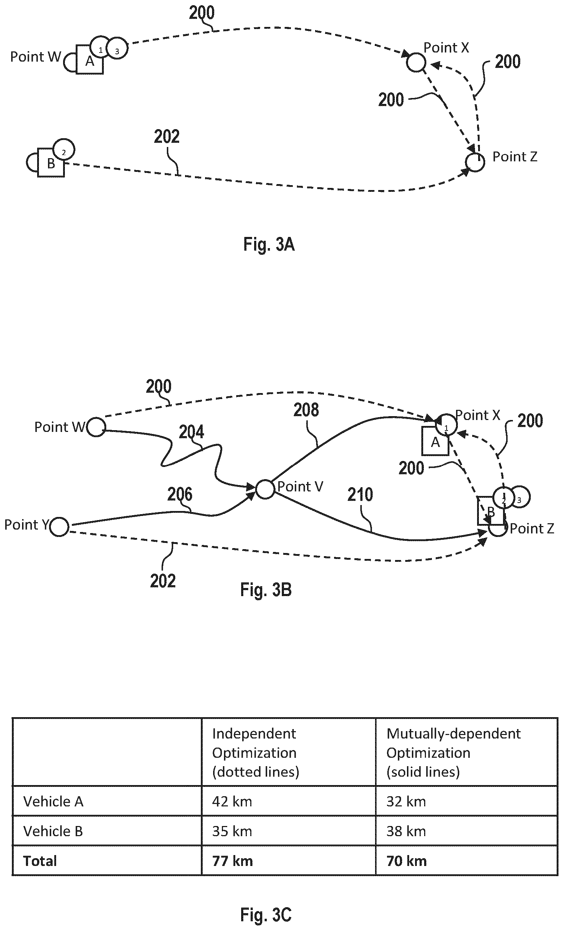

Figure 3A shows again the independent/individual routes 200, 202 for the vehicles A, B from Figure 2 for comparison purposes. Also, Figure 3B shows again the mutually dependent optimized routes 204, 208 for vehicle A and 206, 210 for vehicle B from Figure 2 for comparison purposes. It can be seen that the route optimization based on the at least one optimization parameter done by the route manager 402 leads to an overall distance minimization, where vehicle A has to travel only 32km instead of 42km, and where vehicle B has to travel 38km instead of 35 km. The overall reduction sums up to 7km, as in total (summing up the travel distances for vehicles A, B) 70km has to be traveled instead of 77km.

Figure 4 shows a schematic overview of an example of the claimed system 400 in an embodiment. The system 400 comprises the route manager 402. The system 400 further comprises a server computer (that may be a cloud computer) 404 having a processor 406, a communication interface 408, a memory input 410, an energy storage 412, a navigation and/or mapping functionality unit 414 and a memory output 416. The system 400 according to the embodiment comprises four vehicles A, B, C, D. The vehicles A, B form a delivery fleet E. Vehicle C is part of a delivery fleet F. Vehicle D is part of a delivery fleet G. Each of the vehicles A, B, C, D may comprise a communication interface 418 and/or an energy storage 420 and/or a memory 422 and/or a control unit 424 and/or a navigation and/or mapping functionality unit 426. The route manager 402 may be part of the server computer 404, or vice versa.

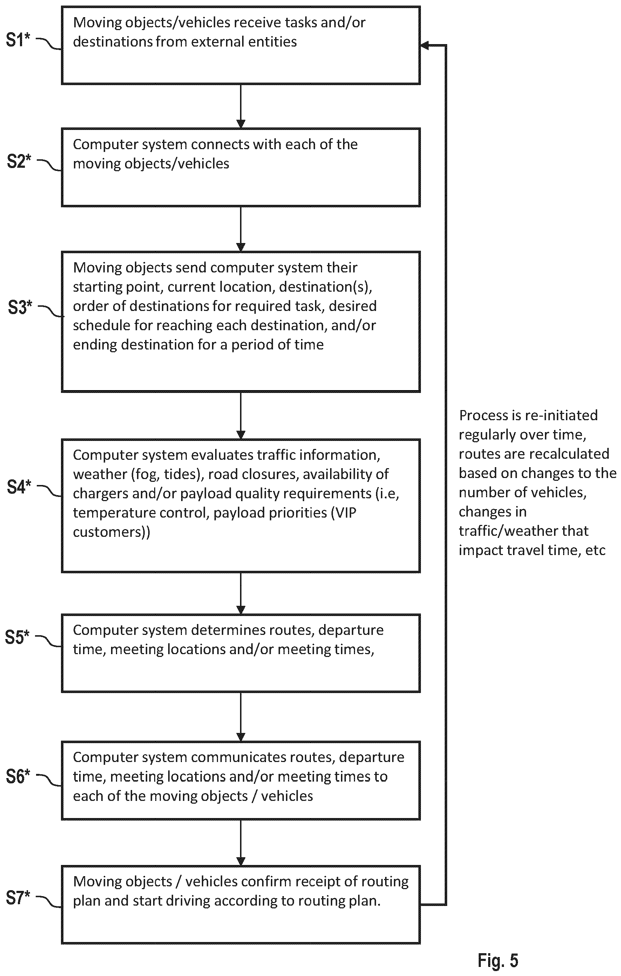

Figure 5 shows a schematic flow chart of an example of the claimed method. Thereby, the method steps S1-S7 are further specified in Figure 5. This is marked by (*). The steps S1-S7 may not correspond to the steps S1*-S7*, neither in their order nor in their content.

The features of the invention described with reference to the illustrated embodiments may also be present in other embodiments of the invention, except where otherwise indicated or were prohibited for technical reasons.

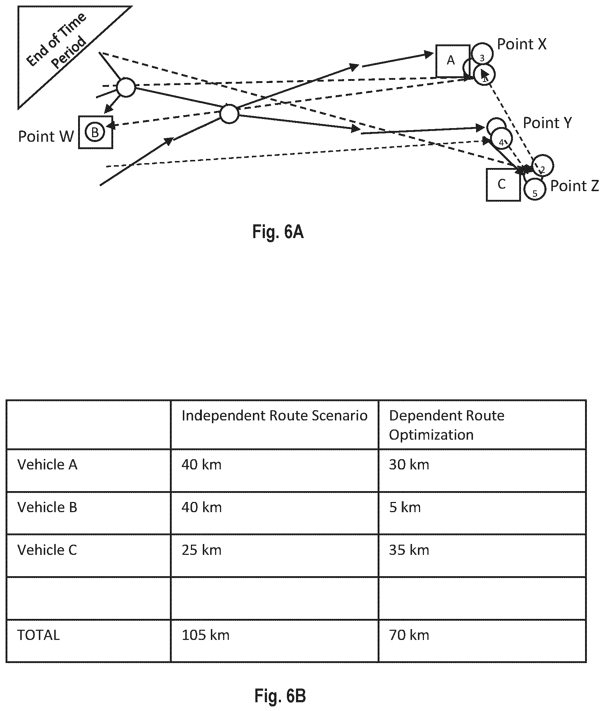

Figures 6A and 6B show an example with three vehicles A, B, C. The three vehicles have to fulfill five delivery requirements (1,2,3,4, and 5) at three different delivery locations/ Point Y, Point X, and Point Z. At the beginning of the time period, each of the vehicles A, B, C has a set of delivery requirements and an ending destination. This is preferably determined by the vehicle A, B, C on its own, without coordination with the other vehicles A, B, C, respectively.

For the Example, the following delivery requirements are considered:

| Vehicle | Delivery Requirements | Ending Destination |
|---|---|---|
| A | Deliver Package 1 to Point X, Deliver Package 2 to Point Z | Point X |
| B | Deliver Package 3 to Point X | Point W |
| C | Deliver Package 4 to Point Y and Package 5 to Point Z | Point Z |

Vehicles A and B and C are independent vehicles, with deliveries and end point destinations determined by separate fleet managers. Each vehicle A, B, C has deliveries (1-5) with specific delivery points X, Y, Z. Each vehicle A, B, C has a pre-determined end point X, Y, Z that it must reach at the end of the time period. The route manager 402 evaluates the delivery requirements, current location, and ending location for each vehicle A, B, C. The route manager 402 determines a route that optimizes the vehicles for cost/energy/fuel/travel time that meets delivery requirements and end point for each vehicle A, B, C. The route manager 402 may direct vehicles A and B to meet at a point where B will transfer delivery 3 to vehicle A. After A and B met, vehicle B may proceed to Point W, where it is required to end the day.

The route manager 402 may direct a second meeting for vehicles A and C. The route manager 402 may direct vehicle A and vehicle C to meet at a specified location. Vehicle A may transfer the delivery item (2) to vehicle C. After meeting and exchanging delivery (2), vehicle A continues to Point X, where it delivers deliveries (1) and (3). Vehicle A will stay at Point X, as it is the pre-determined ending location for vehicle A. Vehicle C may continue to Point Y, where it drops off delivery (4). Vehicle C may then continue to Point Z, to drop off deliveries (2) and (5). Vehicle C may stay at Point Z, as it is the predetermined ending location for vehicle C. At the conclusion, all deliveries have been delivered to their respective destinations and each vehicle A, B, C has ended the day at their prescribed location. The dots may represent the meeting locations that are selected by the route manager 402. The route manager 402 may also specify the order of the meetings to max benefit or minimize cost across all the vehicles A, B, C in the system 400.

An overview of the outcomes is shown in Figure 6B. The overall travel distance can be significantly reduced from 105km to 70km, representing a saving of over 30%. Thus, the claimed method provides significant optimization for route planning.

Features of the invention described with reference to the embodiments outlined above may also be present in other embodiments of the invention, unless stated otherwise or self-evident for technical reasons.

### REFERENCE NUMERALS

- (1): package/delivery
- (2): package/delivery
- (3): package/delivery
- (4): package/delivery
- (5): package/delivery
- 200: individual route of vehicle A
- 202: individual route of vehicle B
- 204: route to meeting point for vehicle A
- 206: route to meeting point for vehicle B
- 208: route from meeting point to end point for vehicle A
- 210: route from meeting point to end point for vehicle B
- 400: system
- 402: route manager
- 404: server computer
- 406: processor
- 408: communication interface
- 410: memory input
- 412: energy storage
- 414: navigation and/or mapping functionality unit
- 416: memory output
- 418: communication interface
- 420: energy storage
- 422: memory
- 424: control unit
- 426: navigation and/or mapping functionality unit
- 428: external entity
- A: vehicle
- B: vehicle
- C: vehicle
- D: vehicle
- E: delivery fleet
- F: delivery fleet
- G: delivery fleet
- V: meeting location/point
- W: current location/point
- X: end location/point
- Y: current location/point
- Z: end location/point

- S1: method step
- S2: method step
- S3: method step
- S4: method step
- S5: method step
- S6: method step
- S7: method step
- S1*: method step
- S2*: method step
- S3*: method step
- S4*: method step
- S5*: method step
- S6*: method step
- S7*: method step
- *: further specified method step

## Claims

1. A method for optimizing route planning for at least two vehicles (A, B, C, D), comprising the steps of:
receiving (S1), by each of the at least two vehicles (A, B, C, D), respective tasks and/or destinations from an external entity (428);
connecting (S2), by a server computer (404), with each of the at least two vehicles (A, B, C, D);
receiving (S3), by the server computer (404) from each of the at least two vehicles (A, B, C, D), data comprising at least one of a starting point, a current location (W, Y), at least one destination (X, Z), an order of destinations for a required task, a desired schedule for reaching each destination (X, Z), and/or an ending destination for a period of time;
evaluating (S4), by the server computer (404), a respective optimized route (204, 206, 208, 210) for each of the at least two vehicles (A, B, C, D) based on an optimization parameter; and
communicating (S5), by the server computer (404), the respective optimized route (204, 206, 208, 210) to the respective one of the at least two vehicles (A, B, C, D).

2. The method of claim 1, wherein the optimization parameter comprises at least one of traffic information, weather conditions, road closures, availability of chargers, and payload quality requirements including temperature control and/or payload priorities.

3. The method of claim 1 or 2, further comprising the step of determining, by the server computer (404), optimized route (204, 206, 208, 210) conditions comprising at least one of departure time, meeting locations, and meeting times.

4. The method of claim 3, wherein the server computer (404) communicates the optimized route (204, 206, 208, 210) conditions to each of the at least two vehicles (A, B, C, D).

5. The method according to any one of the preceding claims, further comprising the step of confirming, by each of the at least two vehicles (A, B, C, D), receipt of the optimized route (204, 206, 208, 210).

6. The method according to any one of the preceding claims, further comprising the step of starting, by each of the at least two vehicles (A, B, C, D), driving according to the respective optimized route (204, 206, 208, 210).

7. The method according to any one of the preceding claims further comprising the step of re-initiating the process regularly over time, wherein routes are recalculated based on changes to the number of vehicles (A, B, C, D) and/or changes in traffic or weather conditions that impact travel time.

8. Method according to any one of the preceding claims, wherein the external entity (428) providing tasks and/or destinations to the at least two vehicles (A, B, C, D) comprise at least one of logistics service providers, ride-sharing platforms, delivery service operators, fleet management systems, governmental transportation authorities and/or private customers.

9. Method according to any one of the preceding claims, wherein the optimization parameter is configured to minimize and/or maximize at least one of total travel distance, total travel time, energy consumption, operational costs, carbon emissions, vehicle utilization efficiency, service reliability, or delivery time accuracy.

10. Method according to any one of the preceding claims, wherein the tasks and/or destinations comprise at least one of delivering goods and/or food and/or packages, transporting passengers and/or ride-sharing, performing maintenance and/or repair services, providing emergency response and/or medical transportation, collecting and/or distributing rental vehicles, and/or conducting autonomous vehicle fleet operations.

11. A system for optimizing route planning for at least two vehicles (A, B, C, D), comprising:
at least two vehicles (A, B, C, D) configured for receiving, by each of the at least two vehicles (A, B, C, D), respective tasks and/or destinations from an external entity (428);
a server computer (404), preferably including a route manager (402), configured for connecting with each of the at least two vehicles (A, B, C, D), receiving from each of the at least two vehicles (A, B, C, D), data comprising at least one of a starting point, a current location (W, Y), at least one destination (X, Z), an order of destinations for a required task, a desired schedule for reaching each destination, and/or an ending destination (X, Z) for a period of time; evaluating a respective optimized route for each of the at least two vehicles (A, B, C, D) based on an optimization parameter; and communicating, by the server computer (404), the respective optimized route (204, 206, 208, 210) to the respective one of the at least two vehicles (A, B, C, D).

12. The system of claim 11, wherein the server computer (404) having a processor (406) and/or a communication interface (408) and/or a memory input (410) and/or an energy storage (412), a navigation and/or mapping functionality unit (414) and/or a memory output (416).

13. The system of claims 11 or 12, wherein the at least two vehicles (A, B, C, D) each comprises a communication interface (418) and/or an energy storage (420) and/or a memory (422) and/or a control unit (424) and/or a navigation and/or mapping functionality unit (426).

14. A computer program product comprising instructions which, when the method according to any one of claims 1 to 10 is executed by a server computer (404), cause the computer to execute the method according to any one of claims 1 to 10.

15. A computer-readable medium on which the computer program product according to the preceding claim is stored.
